(19) Europäisches Patentamt
European Patent Office
Office européen des brevets

(11) **EP 4 491 395 A1**

(12) **EUROPEAN PATENT APPLICATION**

(43) Date of publication:
**15.01.2025 Bulletin 2025/03**

(21) Application number: **23184453.1**

(22) Date of filing: **10.07.2023**

(51) International Patent Classification (IPC):
***B32B 27/32*** *(2006.01)* ***H01G 4/18*** *(2006.01)*

(52) Cooperative Patent Classification (CPC):
(C-Sets available)
**C08J 5/18; H01G 4/18;** C08J 2323/12;
C08J 2423/12; C08J 2445/00; C08L 2203/20;
C08L 2205/242; C08L 2207/10 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Borealis AG**
  **1020 Vienna (AT)**
- **TOPAS Advanced Polymers GmbH**
  **65479 Raunheim (DE)**

(72) Inventors:
- **GITSAS, Antonios**
  **4021 Linz (AT)**
- **Wahner, Udo**
  **4021 Linz (AT)**
- **Tranchida, Davide**
  **4021 Linz (AT)**
- **Gkourmpis, Thomas**
  **444 86 Stenungsund (SE)**
- **Goerlitz, Wolfram**
  **65193 Wiesbaden (DE)**
- **Hatke, Wilfried**
  **65779 Kelkheim (DE)**

(74) Representative: **Ter Meer Steinmeister & Partner Patentanwälte mbB**
**Nymphenburger Straße 4**
**80335 München (DE)**

(54) **COMPOSITION COMPRISING NUCLEATED POLYPROPYLENE AND CYCLIC OLEFIN POLYMER FOR CAPACITORS**

(57) The present invention relates to a polypropylene composition comprising a high isotactic homopolymer of propylene in a content from 70 to less than 95 wt.-%, a cyclic olefin polymer composition in a content from 5 to less than 30 wt.-%, and a nucleating agent in a content from 0.0000001 to 1 wt.-%. The present invention is, furthermore, directed to a cast film comprising the polypropylene composition and a biaxially oriented film comprising the polypropylene composition. Apart from that, a capacitor comprising the biaxially oriented film is provided.

EP 4 491 395 A1

(52) Cooperative Patent Classification (CPC): (Cont.)

C-Sets
**C08L 23/12, C08L 23/0823, C08K 5/0083**

## Description

### Field of the invention

The present invention relates to a polypropylene composition comprising a high isotactic homopolymer of propylene in a content from 70 to less than 95 wt.-%, a cyclic olefin polymer composition in a content from 5 to less than 30 wt.-%, and a nucleating agent in a content from 0.0000001 to 1 wt.-%. The present invention is, furthermore, directed to a cast film comprising the polypropylene composition and a biaxially oriented film comprising the polypropylene composition. Apart from that, a capacitor comprising the biaxially oriented film is provided.

### Technical background

Polypropylene has a relatively high dielectric constant, a low dissipation factor and a good dielectric strength. Due to this, polypropylene has been successfully used as a dielectric in various capacitor film applications. Yet, an issue with the known polypropylene capacitor grades is their limited maximum operating temperature and their susceptibility to oxidation. The new generation of inverters, for example traction inverters for electric mobility and inverters for renewable power such as solar and wind, call for a higher temperature and oxidation resistance of capacitor films.

The demand for a higher stability against external influences, such as high temperatures or a oxygen-rich atmosphere, has been addressed in different ways up to now.

CN101724195 A proposes to combine polypropylene with a composite rubber powder at a weight ratio of 100 : 0.01 - 2.0. The composite rubber powder has a particle size of 20 to 100 nm and consists of a silicone rubber powder and a nucleating agent at a weight ratio of 99 : 1 to 90 : 10. It is prepared by mixing silicon rubber latex, obtained via irradiation vulcanization, with an aqueous solution or emulsion of the nucleating agent.

EP 2 995 641 A1 teaches that a high temperature resistance can be accomplished by combining beta-nucleation of polypropylene having high purity with a long chain branched polypropylene. More specifically, it provides a polypropylene composition comprising 95.0 to 99.9 wt.-% of propylene homopolymer with a specific melt flow rate and a very low ash content, 0.1 to 5.0 wt.-% of long chain branched polypropylene and up to 1000 ppm of beta-nucleating agent.

WO 2018/210854 A1 and WO 2018/197034 A1 suggest that it may be preferable to blend polypropylene with certain amounts of specific cyclic olefin copolymers in order to obtain materials that are suitable for high temperature capacitor applications. In this context, WO 2018/210854 A1 relies on ethylene norbornene copolymers with specific norbornene contents, whereas WO 2018/197034 A1 suggests cyclic olefin copolymers having a glass transition temperature in a broad range from 120 to 170 °C.

Yet, in the above approaches, the increase in the temperature resistance of the capacitor polypropylene compositions has only been achieved at the expense of other crucial properties. Mechanical properties such as low shrinkage and high stiffness as well as the capability to endure high voltages, for example, have been sacrificed to a certain extent.

Thus, there is still a need to provide polypropylene compositions having an improved property set for capacitor applications, *i.e.* a high temperature resistance, high oxidation resistance, a high electrical breakdown strength and suitable mechanical properties. Accordingly, it is an objective of the present invention to overcome the disadvantages of the known compositions and to provide an according polypropylene composition. Another objective of the present invention is the provision of a polypropylene film having superior performance in capacitor applications. Last but not least, the present invention aims at providing a capacitor with improved specifications. Furthermore, capacitor films also need to have a high electrical breakdown strength and good mechanical properties such as a low shrinkage and a high stiffness.

### Summary of the Invention

The above objectives are solved by the polypropylene composition with the features of independent claim 1, the cast film with the features of claim 11, the biaxially oriented film with the features of claim 14 and the capacitor with the features of claim 15.

The polypropylene composition according to the present invention comprises (A) a high isotactic homopolymer of propylene in a content from 70 to less than 95 wt.-%, (B) a cyclic olefin polymer composition in a content from 5 to less than 30 wt.-%, and (C) a nucleating agent in a content from 0.0000001 to 1 wt.-%, wherein the contents of (A), (B) and (C) are each based on the total weight of the polypropylene composition.

The polypropylene composition may further comprise a branched propylene polymer.

For example, the polypropylene composition may comprise (A) a high isotactic homopolymer in a content from 75 to less than 85 wt.-%, (B) a cyclic olefin polymer composition in a content from 10 to less than 25 wt.-%, (C) a nucleating agent in a content from 0.0000001 to 1 wt.-%, and (D) a branched propylene polymer in a content from 0.1 to 10 wt.-%, wherein the contents of (A) to (D) are each based on the total weight of the polypropylene composition.

In another preferred embodiment, the polypropylene composition comprises (A) a high isotactic homopolymer in a content from 75 to less than 85 wt.-%, (B) a cyclic olefin polymer composition in a content from 10 to less than 25 wt.-%, (C) a nucleating agent in a content from 0.0000001 to 1 wt.-%, and (D) a branched propylene polymer in a content from 0.1 to 5 wt.-%, wherein the contents of (A) to (D) are each based on the total weight of the polypropylene composition.

In yet another preferred embodiment, the polypropylene composition comprises (A) a high isotactic homopolymer in a content from 75 to less than 90 wt.-%, (B) a cyclic olefin polymer composition in a content from 10 to less than 25 wt.-%, (C) a nucleating agent in a content from 0.0000001 to 1 wt.-%, and (D) a branched propylene polymer in a content from 0.1 to 5 wt.-%, wherein the contents of (A) to (D) are each based on the total weight of the polypropylene composition.

Preferably, the branched propylene polymer is a propylene polymer having a branching index g' of 0.9 or less, preferably 0.8 or less, wherein the branching index g' is the ratio [iV]br/[iV]lin, with [iV]br being the intrinsic viscosity of the branched propylene polymer and [iV]lin being the intrinsic viscosity of a linear propylene polymer having the same weight average molecular weight as the branched propylene polymer, the intrinsic viscosities being measured according to DIN ISO 1628/1, October 1999 in decalin at 135 °C.

In a preferred embodiment, the polypropylene composition is obtained by melt-blending components (A) to (C) and component (D), if present. A device, in which melt-blending can be carried out, may be selected from the group consisting of kneaders, mills and extruders.

Further, the cyclic olefin polymer composition may, itself be obtained by melt-blending at least two different cyclic olefin polymers.

In contrast to dry-blending approaches, the melt-blending approach allows producing the polypropylene composition with high homogeneity. By selecting the content of the cyclic olefin polymer composition to be from 5 to less than 30 wt.-%, the cyclic olefin polymer composition is finely and uniformly dispersed in a matrix of the high isotactic homopolymer of propylene. Generally, the dispersion state of the cyclic olefin polymer composition is believed to have an influence on the mechanical and electrical properties of the propylene composition. The dimensions and the shape of the domains which are formed by the cyclic olefin polymer composition in the dispersion can be analyzed with an atomic force microscope (AFM) or another type of microscope.

The content of the cyclic olefin polymer composition can be determined by measuring the xylene soluble content of the polypropylene composition.

<u>(A) High Isotactic Homopolymer of Propylene</u>

The expression "homopolymer of propylene" as used in the present invention relates to a polypropylene that consists substantially, *i.e.* of at least 98.0 wt.-%, preferably of at least 99.0 wt.-%, more preferably of at least 99.4 wt.-%, of propylene units. Preferably, only propylene units are detectable in the propylene homopolymer via $^{13}C$ NMR spectroscopy, as described in the example section below.

The high isotactic homopolymer of propylene preferably is a linear polypropylene, *i.e.* a polypropylene that does not have a detectable amount of long-chain or short-chain branches.

In a preferred embodiment of the present invention, the high isotactic homopolymer of propylene is characterized by a rather high pentad isotacticity <mmmm>, measured by $^{13}C$ NMR. More specifically, the high isotactic homopolymer of propylene may have a isotactic pentad fraction of from 93 to 99.5%, preferably 95 to 99.0%, more preferably from 96 to 98.55%. In particular embodiments, the pentad isotacticity of the high isotactic homopolymer of propylene is in the range of 96.0 to 98.5%, still more preferably in the range of 97.0 to 98.0%.

The high isotacticity preferably goes along with a high crystallinity of the material. Moreover, the high isotacticity is preferably accompanied by a low xylene cold soluble (XCS) content. Therefore, in a further preferred embodiment of the present invention, the high isotactic homopolymer of propylene of the present invention is featured by a rather low XCS content, *i.e.* by a XCS content of equal or below 2.0 wt.-%, more preferably of equal or below 1.8 wt.-%, yet more preferably equal or below 1.6 wt.-%. Thus it is in particular appreciated that the high isotactic homopolymer of propylene of the present invention has a XCS content in the range of 0.3 to equal or below 2.0 wt.-%, more preferably in the range of 0.3 to equal or below 1.8 wt.-%, yet more preferably in the range of 0.4 to equal or below 1.6 wt.-%.

It is appreciated that the XCS content indicates that the high isotactic homopolymer of propylene is preferably free of any elastomeric polymer component, like an ethylene propylene rubber. In other words, the high isotactic homopolymer of propylene does not correspond to a heterophasic polypropylene, *i.e.* a system consisting of a polypropylene matrix in which an elastomeric phase is dispersed. Such systems are usually featured by a rather high xylene cold soluble content.

Alternatively or in addition, it is preferred that the high isotactic homopolymer of propylene of the present invention has a melt flow rate given in a specific range. For example, the high isotactic homopolymer of propylene may have a $MFR_2$ (230 °C), measured according to ISO 1133, of from 0.4 to 10 g/10 min, preferably of from 0.5 to 5 g/10 min. In a particularly preferred embodiment, the high isotactic homopolymer of propylene has a $MFR_2$ (230 °C), measured according to ISO 1133, of from 2.0 to 4.5 g/10 min. In this context, it is acknowledged that $MFR_2$ (230 °C) denotes a melt flow rate measured under a load of 2.16 kg at 230 °C.

Furthermore, the high isotactic homopolymer of propylene preferably has an ash content of 60 ppm or less, more preferably 30 ppm or less, even more preferably 20 ppm or less. Preferably, the ash content may be in a range from 5 to 30 ppm, in particular in a range from 10 to 20 ppm. A low ash content helps to achieve satisfactory dielectric properties, such as a high dielectric strength and a low dielectric loss. The ash content may be measured according to ISO 3451-1 (1997).

The high isotactic homopolymer of propylene may have a melting temperature, Tm, measured according to ISO 11357, in a range of from 150 to 170 °C, preferably 160 to 170 °C. The crystallization temperature, Tc, of the high isotactic homopolymer of propylene as measured according to ISO 11357 may be in a range of from 110 to 130 °C, preferably of from 110 to 120 °C.

The high isotactic homopolymer of propylene may also comprise one or more additives. Preferably the one or more additives are present in a content from 0 to 2.0 wt.-%, more preferably in an amount from 0.05 to 1.0 wt.-%, in particular in an amount from 0.05 to 0.5 wt.-%, based on the weight of the high isotactic homopolymer of propylene (A).

The one or more additives may be non-polymeric additives and/or polymeric additives, with non-polymeric additives being preferred. For example, the one or more additives may be selected from the group consisting of antioxidants, stabilizers, acid scavengers, nucleating agents, colorants, plasticizers, slip agents, antiscratch agents, dispersing agents, processing aids, lubricants, pigments, antistatic agent, and the like. It is particularly preferred when the one or more additives are selected from the group consisting of antioxidants, stabilizers and acid scavengers and combinations thereof.

The antioxidants and stabilizers may be selected from the group of hindered phenols and more preferably from the group of hindered phenols not containing phosphorous or sulphur.

The antioxidants and stabilizers are especially preferably one or more compounds selected from the group consisting of 1,3,5-trimethyl-2,4,6-tris(3,5-di-tert-butyl-4-hydroxybenzyl)benzene (sold under trade names Irganox 1330, Anox 330, Ethanox 330 and Kinox-30), pentaerythritol tetrakis(3-(3,5-di-tert-butyl-4-hydroxyphenyl)propionate) (sold under trade names Irganox 1010, Anox 20, Ethanox 310TF and Kinox-10), octadecyl 3-(3',5'-di-tert-butyl-4-hydroxyphenyl)propionate (sold under trade names Irganox 1076, Anox PP 18 and Kinox-16), butylhydroxytoluene (sold under trade names Ionol CP and Vulkanox BHT), 1,3,5-tris(3',5'-di-tert-butyl-4'-hydroxybenzyl)-isocyanurate (sold under trade names Irganox 3114, Anox IC-14, Ethanox 314 and Kinox-34), and 3,4-dihydro-2,5,7,8-tetramethyl-2-(4,8,12-trimethyltridecyl)-2H-1-benzopyran-6-ol (sold under trade names Irganox E 210 and alpha-tocopherol).

The antioxidants and stabilizers are preferably present in a total amount of from 500 to 8000 ppm, based on the total weight of the high isotactic homopolymer of propylene (A). More preferably, antioxidants and stabilizers are present in a total amount of from 800 to 7000 ppm, still more preferably of from 1000 to 6000 ppm, and in particular from 1500 to 6000 ppm, based on the total weight of the high isotactic homopolymer of propylene (A). In view of the desired application of the composition in the capacitor field, the antioxidants and stabilizers preferably do not contain phosphorous containing secondary antioxidants, such as tris(2,4-ditert-butylphenyl)phosphite. Without wishing to be bound by theory, the latter compounds are believed to increase the dissipation in the final capacitor.

Acid scavengers may be salts of organic acids, such as stearates. They typically serve to neutralize acids in a polymer. Examples of such compounds are calcium stearate, zinc stearate and zinc oxide. Acid scavengers are preferably used in an amount of from 20 ppm to 2000 ppm, more preferably from 50 ppm to 1000 ppm, most preferably from 60 to 600 ppm, based on the total weight of the high isotactic homopolymer of propylene (A).

Thus, the one or more additives may, for example, be selected from the group consisting of pentaerythritol tetrakis(3-(3,5-di-tert-butyl-4-hydroxyphenyl)propionate) (sold under trade names Irganox 1010 Anox 20, Ethanox 310TF and Kinox-10), butylhydroxytoluene (sold under trade names Ionol CP and Vulkanox BHT), calcium stearate and combinations thereof.

<u>(B) Cyclic Olefin Polymer Composition</u>

The cyclic olefin polymer composition preferably is a thermoplastic composition.

The cyclic olefin polymer composition may comprise or may essentially consist of one type of cyclic olefin polymer or of a blend of at least two different types of cyclic olefin polymers.

It is appreciated that the term "cyclic olefin polymer" refers to a polymer comprising a cyclic olefin unit. The cyclic olefin polymer may be a cyclic olefin homopolymer or a cyclic olefin copolymer.

Within the present invention the term "copolymer" refers to polymers prepared from at least two different monomers. In other words, the term "copolymer" also covers terpolymers and copolymers with four or more different monomeric units. Thus, a cyclic olefin polymer may be a copolymer comprising a first monomeric unit, which is a cyclic olefin unit, and at least one second monomeric unit, which is different from the first monomeric unit, such as a non-cyclic olefin unit. Cyclic olefin copolymers comprising at least a first cyclic olefin unit and a second cyclic olefin unit, which is different from the first cyclic olefin unit, are equally covered by the term "cyclic olefin polymer".

The cyclic olefin polymer may either be obtained by ring-opening or ring-sustaining polymerization of at least one cyclic olefin monomer. Among these alternatives, a cyclic olefin polymer obtained by ring-sustaining polymerization is

preferred.

In a further preferred embodiment, the at least one cyclic olefin monomer is selected from the group consisting of cyclopentadiene, tetracyclododecen, norbornene and derivatives of the aforementioned compounds. Norbornene and its derivatives are particularly preferred examples for the at least one cyclic olefin monomer.

Norbornene and its derivatives are preferably compounds according to formula (I),

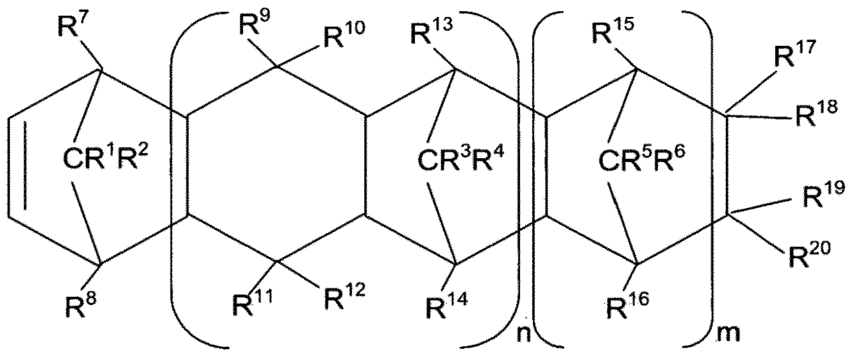

(I),

wherein n is 0 or 1,

m is 0 or an integer, in particular 0 or 1,

$R^1$, $R^2$, $R^3$, $R^4$, $R^5$, $R^6$ are independently selected from the group consisting of hydrogen, halogen, an alkyl group, a cycloalkyl group, an aryl group and an alkoxy group,

$R^7$, $R^8$, $R^9$, $R^{10}$, $R^{11}$, $R^{12}$, $R^{13}$, $R^{14}$, $R^{15}$, $R^{16}$ are independently selected from the group consisting of hydrogen and an alkyl group,

$R^{17}$, $R^{18}$, $R^{19}$, $R^{20}$ are independently selected from the group consisting of hydrogen, halogen, an alkyl group, a cycloalkyl group and an aryl group wherein $R^{17}$ and $R^{19}$ may alternatively form a cyclic ring or a cyclic system, wherein the cyclic ring or cyclic system may be saturated or unsaturated.

Further and equally preferred examples of norbornene derivatives are the compounds according to formula (II),

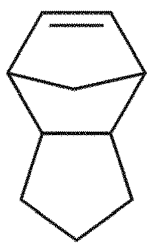 , 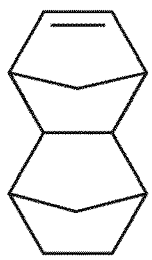 , 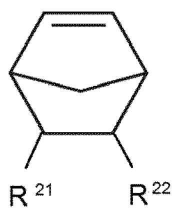 , 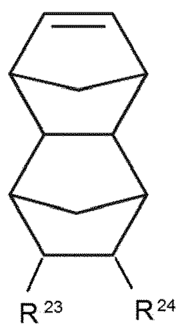 (II)

wherein $R^{21}$ and $R^{22}$ are independently selected from the group consisting of hydrogen, a $C_5$-$C_7$ cycloalkyl group, $C_5$-$C_7$ aryl group and a $C_1$-$C_4$ alkyl group and wherein $R^{23}$ and $R^{24}$ are independently selected from the group consisting of hydrogen and a $C_1$-$C_4$ alkyl group.

The non-cyclic olefin monomer can be an alpha-olefin. Non-limiting examples of alpha-olefins are $C_2$-$C_8$ alpha-olefins, such as alpha-olefins selected from the group consisting of ethylene, propylene, 1-butene, 2-methyl-1-propene (isobutylene) and 3-methyl-1-butene. Preferred alpha-olefins are linear $C_2$-$C_8$ alpha-olefins, such as ethylene and propylene. Particularly preferred is ethylene as alpha-olefin.

In one embodiment, the cyclic olefin polymer composition comprises at least one cyclic olefin copolymer selected from the group of norbornene-ethylene copolymers and tetracyclododecene-ethylene copolymers or a blend of at least two of said cyclic olefin copolymers. In a particularly preferred embodiment, the cyclic olefin polymer composition comprises or essentially consists of one norbornene-ethylene copolymer or a blend of two norbornene-ethylene copolymers with different norbornene contents. Further, non-limiting examples of cyclic olefin polymers are polymers

commercially available as APEL® from Mitsui Chemical or as TOPAS® from TOPAS Advanced Polymers.

The glass transition temperature (hereinafter also referred to as "Tg") of the cyclic olefin polymer composition may be controlled by the type of monomers used, *e.g.* by the type of the at least one cyclic olefin monomer and optionally, if present, by the type of the non-cyclic olefin monomer. If the cyclic olefin polymer composition is a blend of at least two cyclic olefin polymers, the weight ratio of the cyclic olefin polymers has an influence on the glass transition temperature of the compositions as well. Further, in case the cyclic olefin polymer composition is a composition comprising at least one cyclic olefin copolymer, the amount of the cyclic olefin monomer may be used to customize the glass transition temperature of the overall composition. From norbornene-ethylene copolymers it is, for example, known that a higher glass transition temperature may be achieved by increasing the content of norbornene. The same applies to combinations of other cyclic olefin monomers with non-cyclic olefin monomers.

The cyclic olefin polymer composition may be a cyclic olefin copolymer composition. The cyclic olefin copolymer composition may comprise cyclic olefin units, for example norbornene units, in a content of from 70 to 90 wt.-%, preferably from 75 to 85 wt.-%, more preferably from 75 to 80 wt.-%, and non-cyclic olefin units, for example ethylene units, in a content of from 10 to 30 wt.-%, preferably from 15 to 25 wt.-%, more preferably from 20 to 25 wt.-%, wherein the contents are each based on the total weight of the cyclic olefin copolymer composition. The content of the cyclic olefin units of the cyclic olefin polymer (B) may be determined by $^{13}C$ NMR spectroscopy, in case the cyclic olefin polymer (B) is soluble, or may be calculated from the glass transition temperature of the cyclic olefin polymer, in case in case the cyclic olefin polymer (B) is insoluble. If the cyclic olefin polymer (B) is a norbornene-ethylene copolymer and the cyclic olefin units are norbornene units, their content can be determined as described in Macromol. Chem. Phys. 199, 1221-1232 (1998).

In a preferred embodiment, the cyclic olefin polymer composition may have a glass transition temperature, measured according to ISO 11357, in the range of from 140 to 180 °C. In another preferred embodiment, the cyclic olefin polymer composition may have a glass transition temperature, measured according to ISO 11357, in the range of from 140 to 160 °C, more preferably in the range of 140 to 155 °C, most preferably 145 to 150 °C.

In a particularly preferred embodiment, the cyclic olefin polymer composition comprises or essentially consists of at least a first cyclic olefin polymer (b1) and a second cyclic olefin polymer (b2). The first cyclic olefin polymer (b1) preferably has a glass transition temperature, measured according to ISO 11357, of below 140 °C, more preferably of from 60 to below 140°C, in particular of from 120 to below 140 °C. The second cyclic olefin polymer (b2) preferably has a glass transition temperature, measured according to ISO 11357, of above 155 °C, more preferably of from above 155 to 190 °C, in particular of from above 155 to 175°C. The first cyclic olefin copolymer and the second cyclic olefin copolymer and optional further cyclic olefin polymers may be melt-blended to form the cyclic olefin polymer composition, preferably in a weight ratio of 1:5 to 5:1, more preferably in a weight ratio of 1:3 to 3:1, in particular in a weight ratio of 1:1.

It is assumed that the use of two cyclic olefin polymer with different glass transition temperatures results in a broad glass transition temperature step of the polypropylene composition and is, thus, responsible for an extended processing window of the polypropylene composition. Moreover, the use of two cyclic olefin polymers with different glass transition temperatures results in a better control of the high-temperature performance of the material.

The cyclic olefin polymer composition preferably has a $MFR_2$ (260 °C, 2.16 kg), measured according to ISO 1133, of from 2 to 50 g/10 min, preferably from 2 to 25 g/10 min, more preferably from 2 to 15 g/10 min.

(C) Nucleating Agent

The nucleating agent (C) may preferably be present in a content from 0.000001 to 1 wt.-%, more preferably in a content from 0.00001 to 1 wt.-% with respect to the total weight of the polypropylene composition.

The nucleating agent (C) may be a beta-nucleating agent. It is particularly preferred that the nucleating agent is a beta-nucleating agent, when the polypropylene composition comprises a branched propylene polymer (D).

The term "beta-nucleating agent" refers to any nucleating agent which is suitable for inducing crystallization of propylene polymers in the hexagonal or pseudohexagonal modification. Mixtures of such nucleating agents may also be employed.

Suitable types of beta-nucleating agents are dicarboxylic acid derivative type diamide compounds from $C_5$-$C_8$-cycloalkyl monoamines or $C_6$-$C_{12}$-aromatic monoamines and $C_5$-$C_8$-aliphatic, $C_5$-$C_8$-cycloaliphatic or $C_6$-$C_{12}$-aromatic dicarboxylic acids, *e.g.* N,N'-di-$C_5$-$C_8$-cycloalkyl-2,6-naphthalene dicarboxamide compounds such as N,N'-dicyclohexyl-2,6-naphthalene dicarboxamide and N,N'-dicyclooctyl-2,6-naphthalene dicarboxamide, N,N'-di-$C_5$-$C_8$-cycloalkyl-4,4-biphenyldicarboxamide compounds such as N,N'-dicyclohexyl-4,4-biphenyldicarboxamide and N,N'-di cyclopentyl-4, 4-biphenyldicarboxamide, N,N'-di-$C_5$-$C_8$-cycloalkyl-terephthalamide compounds such as N,N'-dicyclohexylterephthalamide and N,N'-dicyclopentylterephthalamide, N,N'-$C_5$-$C_8$-cycloalkyl-1,4-cyclohexanedicarboxamide compounds such as N,N'-dicyclo-hexyl-1,4-cyclohexanedicarboxamide and N,N'-dicyclohexyl-1,4-cyclopentanedicarboxamide, diamine derivative type diamide compounds from $C_5$-$C_8$-cycloalkyl monocarboxylic acids or $C_6$-$C_{12}$-aromatic monocarboxylic acids and $C_5$-$C_8$-cycloaliphatic or $C_6$-$C_{12}$-aromatic diamines, e.g. N,N'-$C_6$-$C_{12}$-arylene-bis-benzamide compounds such as N,N'-p-phenylene-bis-benzamide and N,N'-1,5-naphthalene-bis-benzamide, N,N'-$C_5$-$C_8$-cycloalkyl-bis-benzamide

compounds such as N,N'-1,4-cyclopentane-bis-benzamide and N,N'-1,4-cyclohexane-bis-benzamide, N,N'-p-$C_6$-$C_{12}$-arylene-bis-$C_5$-$C_8$-cycloalkyl carboxamide compounds such as N,N'-1,5-naphthalene-bis-cyclohexanecarboxamide and N,N'-1,4-phenylene-bis-cyclohexanecarboxamide, and N,N'-$C_5$-$C_8$-cycloalkyl-bis-cyclohexanecarboxamide compounds such as N,N'-1,4-cyclopentane-bis-cyclohexanecarboxamide and N,N'-1,4-cyclohexane-bis-cyclohexanecarboxamide, amino acid derivative type diamide compounds from amidation reaction of $C_5$-$C_8$-alkyl, $C_5$-$C_8$-cycloalkyl- or $C_6$-$C_{12}$-arylamino acids, $C_5$-$C_8$-alkyl-, $C_5$-$C_8$-cycloalkyl- or $C_6$-$C_{12}$-aromatic monocarboxylic acid chlorides and $C_5$-$C_8$-alkyl-, $C_5$-$C_8$-cycloalkyl- or $C_6$-$C_{12}$-aromatic monoamines, e.g. N-phenyl-5-(N-benzoylamino)pentane amide and N-cyclohexyl-4-(N-cyclohexyl-carbonylamino)benzamide. Further suitable beta-nucleating agents are: quinacridone type compounds, e.g. 5,12-dihydro-quino[2,3-*b*]acridine-7,14-dione (i.e. quinacridone), dimethylquinacridone and dimethoxy quinacridone, quinacridonequinone type compounds, e.g. quino[2,3-*b*]acridine-6,7,13,14(5H,12H)-tetrone (i.e. quinacridonequinone), and dimethoxyquinacridonequinone and dihydroquinacridone type compounds, e.g. 5,6,12,13-tetrahydroquino[2,3-*b*]acridine-7,14-dione (i.e. a dihydroquinacridone), dimethoxy dihydroquinacridone and dibenzodihydroquinacridone.

Still further suitable beta-nucleating agents are dicarboxylic acid salts of metals from group 11a of periodic table, e.g. pimelic acid calcium salt and suberic acid calcium salt; and mixtures of dicarboxylic acids and salts of metals from group 1 1a of the periodic table.

In a particularly preferred embodiment, when the nucleating agent is a beta-nucleating agent, the nucleating agent is a quinacridone or quinacridonequinone type compound. For example, when the nucleating agent is a beta-nucleating agent, the nucleating agent is selected from the group consisting of 5,12-dihydro-quino[2,3-*b*]acridine-7,14-dione, quino[2,3-*b*]acridine-6,7,13,14(5H,12H) tetrone, 5,6,12,13 tetrahydroquino[2,3-*b*]acridine-7,14-dione and mixtures thereof.

The introduction of a beta-nucleating agent offers the possibility to control the microstructure of the polypropylene composition. In particular, the development of restricted amorphous fraction (RAF) can be adjusted and, as a consequent, charge mobility in a biaxially oriented film comprising said polypropylene composition can be reduced.

(D) Branched propylene polymer

The polypropylene composition preferably further comprises a branched propylene polymer in a content from 0.1 to 10 wt.-%, in particular from 0.1 to 5 wt.-%, based on the total weight of the polypropylene composition. The branched propylene polymer preferably has a branching index g' of 0.9 or less, preferably 0.8 or less. The branching index g' defines the degree of branching and correlates with the amount of branches of a polymer. In the present invention, the branching index g' is the ratio $[iV]_{br}/[iV]_{lin}$, with $[iV]_{br}$ being the intrinsic viscosity of the branched propylene polymer and $[iV]_{lin}$ being the intrinsic viscosity of a linear propylene polymer having the same weight average molecular weight as the branched propylene polymer, the intrinsic viscosities being measured according to DIN ISO 1628/1, October 1999 in decalin at 135 °C.

The branching index of the branched propylene polymer will be usually at least 0.1.

The term "branched propylene polymer" used in the present invention refers to a branched polypropylene differing from a linear polypropylene in that the polypropylene backbone has side chains whereas a non-branched polypropylene, *i.e.* a linear polypropylene, does not have side chains. The presence of side chains has a significant impact on the rheology of the polypropylene. Accordingly, linear polypropylenes and branched polypropylenes can be clearly distinguished by their flow behaviour under stress.

Branching can be achieved by using specific catalysts, i.e. specific single-site catalysts, or by chemical modification. Concerning the preparation of a branched propylene polymer obtained by the use of a specific catalyst reference is made to EP 1 892 264 A1. With regard to a branched propylene polymer obtained by chemical modification it is referred to EP 0 879 830 Al. In such a case the branched propylene polymer is also called high melt strength polypropylene. The branched propylene polymer according to the present invention is preferably obtained by chemical modification as described in more detail below and thus is a high melt strength polypropylene (HMS-PP). Therefore the terms "branched propylene polymer" and "high melt strength polypropylene (HMS-PP)" can be regarded in the present invention as synonyms. An accordingly prepared branched propylene polymer is also known as long chain branched propylene polymer. Therefore the branched propylene polymer, i.e. the high melt strength polypropylene (HMS-PP), of the present invention has a F30 melt strength of more than 15.0 cN and a v30 melt extensibility of more than 200 mm/s, preferably has a F30 melt strength in the range of more than 15.0 to 50.0 cN, more preferably 20.0 to 45.0 cN, like 25.0 to 40.0 cN, and a v30 melt extensibility in the range of more than 200 to 300 mm/s, preferably 215 to 285 mm/s, more preferably 235 to 275 mm/s in order to provide a resulting polypropylene composition with good strain hardening effect. The F30 melt strength and the v30 melt extensibility are measured according to ISO 16790:2005.

The branched propylene polymer can be produced by any number of processes, e.g. by treatment of the unmodified propylene polymer with thermally decomposing radical forming agents and/or by treatment with ionizing radiation, where both treatments may optionally be accompanied or followed by a treatment with bi- or multifunctional

ethylenically unsaturated monomers, e.g. butadiene, isoprene, dimethylbutadiene, divinylbenzene or trivinylbenzene.

"Bifunctional ethylenically unsaturated" as used herein means the presence of two non-aromatic double bonds, as in e.g. divinylbenzene or cyclopentadiene. Only such bifunctional ethylenically unsaturated compounds are used which can be polymerised with the aid of free radicals. The bifunctionally unsaturated monomer is in its chemically bound state not actually "unsaturated", because the two double bonds are each used for a covalent bond to the polymer chains of the linear polypropylene.

Examples of the branched propylene polymer, are in particular: polypropylenes modified by reaction with bismaleimido compounds in the melt (EP-A-0 574 801 and EP-A-0 574 804), polypropylenes modified by treatment with ionizing radiation (EP 0 190 889 A2) polypropylenes modified by treatment with peroxides in the solid phase (EP 0 384 431 A2) or in the melt (EP 0 142 724 A2), polypropylenes modified by treatment with bifunctional ethylenically unsaturated monomers under the action of ionizing radiation (EP A 0 678 527), polypropylenes modified by treatment with bifunctional ethylenically unsaturated monomers in the presence of peroxides in the melt (EP A 0 688 817 and EP A 0 450 342).

From the above list, those branched propylene polymers are preferred, which are obtained by treatment with peroxides, especially when followed by a treatment with bifunctional ethylenically unsaturated monomers.

A preferred branched propylene polymer is obtained by mixing a linear polypropylene with 0.01 to 3 wt.-% of an organic peroxide which is thermally decomposable under melting conditions of the polypropylene and heating and melting the mixture.

A still more preferred branched propylene polymer is obtained by mixing a linear polypropylene with 0.01 to 3 wt.-% of an organic peroxide which is thermally decomposable under melting conditions of the polypropylene and with from 0.2 to 3 wt.-% of a bifunctional ethylenically unsaturated monomer and heating and melting the mixture.

The bifunctional ethylenically unsaturated monomer may be added at any time before or during heating and melting the linear polypropylene/peroxide mixture. The bifunctional monomer may also be added to the linear polypropylene before it is mixed with the peroxide. According to a preferred embodiment the bifunctional monomer is in gaseous or liquid state absorbed by the - still solid - polypropylene.

According to a preferred method, the branched propylene polymer is prepared by mixing a particulate linear propylene polymer with from 0.05 to 3 wt.-%, based on the linear propylene polymer, of an organic peroxide which is thermally decomposable under melting conditions of the polypropylene (acyl peroxides, alkyl peroxides, peresters and/or peroxycarbonates). The peroxides may optionally be solvatised in an inert solvent. Mixing is performed at temperatures of from 30 to 100 °C, preferably of from 60 to 90 °C.

Mixing with the peroxide(s) is followed by contacting the polypropylene/peroxide mixture with the bifunctional ethylenically unsaturated monomer(s). The bifunctional monomer may be in gaseous or liquid state and may be applied in pure or diluted form, e.g. diluted with an inert gas or solvatised in an organic solvent. The bifunctional monomer is allowed to be absorbed by the particulate polypropylene at a temperature of from 20 to 120 °C, preferably of from 60 to 100 °C. Practical sorption times are from 10 to 1000 s, 60 to 600 s being preferred.

This typically results in an absorbed amount of bifunctional monomer of from 0.01 to 10 wt.-%, respectively from 0.05 to 2 wt.-%, based on the linear propylene polymer.

The polypropylene/peroxide/monomer mixture is then heated and melted in an atmosphere comprising inert gas, e.g. $N_2$, and/or the bifunctional monomer, from sorption temperature to 210 °C. This causes the peroxides to decompose and to generate free radicals at the propylene polymer chains which react with the bifunctional monomers.

The melt is heated up to 280 °C in order to remove unreacted monomers and decomposition products and finally the melt is pelletised.

The linear polypropylene comprises propylene homopolymers, copolymers of propylene and ethylene and/or alpha-olefins with 4 to 18 carbon atoms and mixtures of such homo- and copolymers. According to a preferred embodiment of the present, invention the branched propylene polymer is prepared based on a propylene homopolymer with low ash content, preferably an ash content of < 60 ppm.

According to a still further preferred embodiment of the present invention, the branched propylene polymer is prepared based on a high isotactic homopolymer of propylene like the high isotactic homopolymer of propylene, the high isotactic homopolymer of propylene being linear.

The particulate linear propylene polymer may have the shape of powders, granules or grit. The above described process preferably is a continuous method, performed in continuous reactors, mixers, kneaders and extruders. Batchwise production of the modified propylene polymer, however, is feasible as well.

Preferably the bifunctional monomers are absorbed by the linear propylene polymer from the gas phase.

The bifunctional ethylenically unsaturated monomers preferably are $C_4$ to $C_{10}$ dienes and/or $C_7$ to $C_{10}$ divinyl compounds. Especially preferred are butadiene, isoprene, dimethyl-butadiene or divinylbenzene.

Peroxides that are suitable for the above described process have been described in WO 2020/127862 A1, which is incorporated herein by reference.

Film

The present invention furthermore provides a film comprising the polypropylene composition as described above. The film may be a cast film or a biaxially oriented film (BOPP). Furthermore, the film preferably has a thickness from 1 to 1000 μm, more preferably from 1 to 300 μm, most preferably from 1 to 250 μm. When the film is a cast film, the film preferably has a thickness from 100 to 1000, more preferably from 200 to 300 μm. When the film is a biaxially oriented film, the film may have a thickness from 1 to 100 μm, such as from 1 to 10 μm. Reduced thicknesses are especially advantageous since current attempts are to provide electric systems with higher energy density and efficiency. Reducing the space requirement for the film in film capacitors helps to achieve this goal.

If provided as a cast film with a thickness of 250 μm, the film preferably has a dielectric breakdown field strength, $E_{b,}$63.2%, of 118 kV/mm or more, preferably 120 kV/mm or more, determined according to IEC 60243-1 at 90 °C and according to IEC 62539. For example, the dielectric breakdown field strength, $E_{b,}$63.2%, of the cast film measured according to IEC 60243-1 at 90 °C and with a thickness of 250 μm and afterwards evaluated according to IEC 62539 may be in the range from 118 to 250 kV/mm, preferably 120 to 200 kV/mm.

It is further preferable when the cast film has an oxygen induction temperature of 250.0 °C or more, wherein the oxygen induction temperature is measured according to ISO 11357, and a DC conductivity of 2 fS/cm or less when taken as the inverse of the DC electrical resistance as determined in accordance with ASTM D257 at a temperature of 90 °C. For example, the DC conductivity of the cast film may be from 0.01 to 2 fS/cm.

The biaxially oriented polypropylene film according to the present invention may be obtained in two steps. In a first step, a non-oriented film is produced by extruding the polypropylene composition through a flat die. In a second step, the non-oriented film is stretched in machine direction (MD) and transverse direction (TD). The stretching or orientation of the non-oriented film may be performed simultaneously in machine direction and transverse direction. The two steps of the method may be conducted in a continuous process. The non-oriented film may be collected and cooled with a rotating chill roll for solidification of the film and may continuously be transported from the chill roll to the drawing apparatus.

In an embodiment, the biaxially oriented polypropylene film comprises at least 80 wt.-%, more preferably comprises at least 90 wt.-%, yet more preferably consists of or essentially consists of the polypropylene composition as defined in the present invention. The biaxially oriented polypropylene film preferably has a stretching ratio of at least 4 times, preferably at least 5 times, in the machine direction and at least 4 times, preferably at least 5 times, in the transverse direction, more preferably has a stretching ratio of at least 9 times in the machine direction and at least 5 times in the transverse direction.

The biaxially oriented polypropylene film can be prepared by any conventional drawing processes known in the art. Accordingly, the process for the manufacture of a biaxially oriented polypropylene film preferably may make use of the tenter method known in the art.

The tenter method is a method in which the polypropylene composition as defined herein is melt extruded from a slit die such as a T-die and cooled on a cooling drum obtaining a non-oriented film. Said film is pre-heated, for example with a heated metal roll, and then stretched in the length direction between a plurality of rolls over which a difference in peripheral speeds is established and then both edges are gripped with grippers and the sheet is stretched in the transverse direction in an oven by means of a tenter resulting in a biaxially oriented film. The temperature of said film during the longitudinal drawing is preferably controlled in such a way as to be within the temperature range of the melting point of the polypropylene composition.

Subsequently, the biaxially oriented film can be treated by corona discharge in air, nitrogen, carbon dioxide gas or any of the mixtures. If the film should be metallized for film capacitor applications, the corona discharge treatment enhances the adhesive strength to the metal that is to be deposited.

By the drawing process described above, a BOPP is obtained, which does preferably not comprise mechanical failure sites as determined by scanning electron microscopy.

Capacitor

In another aspect, the present invention relates to a capacitor comprising the biaxially oriented film as described above. Capacitors comprising this biaxially oriented film are expected to have a longer lifetime and a higher temperature resistance than conventional capacitors.

Preferably, the biaxially oriented film as described above is metallized and the capacitor is a metalized film capacitor. The metallization of the biaxially oriented film can be performed by any process that is known in the art, for example by evaporation, electrodeposition, melting, ion beam vacuum deposition, sputtering or ion plating. The thickness of the obtained metal layer may be from 100 Å (0.01 μm) to 5000 Å (0.5 μm).

## Examples

The nature of the present invention will become more clearly apparent and better to be understood in view of the accompanying examples. The examples are, however, in no way intended to limit the scope of the invention.

### Measurement Methods

*Oxygen Induction Temperature (OIT)*

The OIT test was performed according to ISO 11357 using a Differential Scanning Calorimeter (DSC) Q20 from TA Instruments. A circular sample with a diameter of 5 mm was punched out of a compression moulded plaque with thickness of 650±50 μm, and then placed in an aluminium pan. The sample was heated to 350 °C (with heating rate of 20 °C/min) in oxygen atmosphere with a flow rate of 50 ml/min. Under these conditions the stabiliser was consumed over time until it was totally depleted. At this point the polymer sample degrades or oxidizes liberating additional heat (exothermal reaction). The Oxidation Induction Temperature is defined as the temperature at which the onset inflection point for the exothermal reaction occurs, as measured by the standard option of the Universal Analysis software. Two measurements were performed for each material and the average value was calculated.

*Quantification of microstructure by NMR spectroscopy*

Quantitative nuclear-magnetic resonance (NMR) spectroscopy was used to quantify the isotacticity and comonomer content of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probehead at 125 °C using nitrogen gas for all pneumatics.

For polypropylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilizing the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For polypropylene homopolymers all chemical shifts are internally referenced to the methyl isotactic pentad <mmmm> at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * ( mmmm \;/\; \text{sum of all pentads} )$$

The absence of ethylene in the high isotactic homopolymer of propylene could be quantified using the method of Wang et. al. (Wang, W-J., Zhu, S., Macromolecules 33 (2000), 1157) through integration of multiple signals across the whole spectral region of a $^{13}C\{^1H\}$ spectra acquired using defined conditions. This method was chosen for its accuracy, robust nature and ability to account for the presence of regio-defects when needed. Integral regions were slightly adjusted to increase applicability to a wider range of comonomer contents.

The ethylene incorporation in mole percent is computed as follows:

$$E\ [mol\%] = 100 * fE$$

The ethylene incorporation in weight percent is calculated as follows:

$$E\ [wt\%] = 100 * ( fE * 28.05 ) / ( (fE * 28.05) + ((1-fE) * 42.08) )$$

*$MFR_2$*

The $MFR_2$ is measured according to ISO 1133 (at 2.16 kg load) and either at a temperature of 230 °C (for the high isotactic homopolymer of propylene) or at a temperature of 260 °C (cyclic olefin polymer composition).

*XCS Content*

The XCS content was determined in weight percent at 23 °C according to ISO 16152.

*Glass Transition Temperature Tg*

The glass transition temperature was measured with a differential scanning calorimeter according to ISO 11357 at a scan rate of 10 K/min.

*Melting Temperature Tm, Crystallization Temperature Tc*

Differential Scanning Calorimetry (DSC) experiments were run on a TA Instruments Q2000 device calibrated with Indium, Zinc, Tin according to ISO 11357/1. The measurements were run under nitrogen atmosphere (50 mL $min^{-1}$) on 5 $\pm$0.5 mg samples in a heat/cool/heat cycle with a scan rate of 10 K/min between -30 °C and 225 °C according to ISO 11357/3. Melting (Tm) and crystallization (Tc) temperatures were taken as the peaks of the endotherms and exotherms in the cooling cycle and the second heating cycle respectively.

*Ash Content*

The ash content of the polymer was determined according to measured according to ISO 3451-1 (1997). Doing so, about 100 g of polymer were weighed into a platinum crucible. The crucible is then heated in a Bunsen burner flame so that the polymer slowly burns. After the polymer is completely burned the crucible is cooled, dried and weighed. The ash content is then the weight of the residue divided by the weight of the polymer sample. At least two measurements are made and if the difference between the measurements is more than 7 ppm then a third measurement is made.

*Dielectric Breakdown Measurement*

The dielectric breakdown strength (also referred to as "dielectric breakdown field strength"), commonly indicated in kV/mm, is a property of gases, liquids and solids. When the electric field exceeds the breakdown field, breakdown occurs by a discharge channel through the material, connecting the electrodes. In solids, the discharge destroys the material irreversibly, while in gases and liquids damage is temporary and reversible.

Generally, a breakdown event occurs with a high randomness, *i.e.* when identical specimens are tested to establish the breakdown distribution (see details below), high data dispersion is observed and often the data are not normal distributed (see Dissado L. A.; Fothergill J. C. "Electrical degradation and breakdown in polymers", IEEE Materials and Devices Series 9, Peter Peregrinus Ltd., 1992). The reason for the random occurrence of breakdown events is the unspecific and localized breakdown initiation, at sites of electric field enhancement and sites of low breakdown strength (see Dissado L. A.; Fothergill J. C. "Electrical degradation and breakdown in polymers", IEEE Materials and Devices Series 9, Peter Peregrinus Ltd., 1992). Generally, structural heterogeneities of the material, inclusions of contaminants or voids (see Chen G.; Davies A.E. The influence of defects on the short-term breakdown characteristics and long-term dc performance of LDPE insulation. IEEE Transactions on Electrical Insulation, 2000, 7, 401-407) and surface roughness (see Rytoluoto L; Gitsas A.; Pasanan S.; Lahti K. Effect of film structure and morphology on the dielectric breakdown characteristics of cast and biaxially oriented polypropylene films. European Polymer Journal, 2017, 95, 606-624) can be potential sites of breakdown and they are inevitable in industrial production.

Breakdown testing

Breakdown strength of solids was tested in a short voltage ramp test. At a temperature of 90 °C, a thin specimen of a cast film (250 μm thick) was sandwiched between electrodes and the voltage was increased (linearly, exponentially, in steps, etc.) until breakdown occured. The voltage at which the breakdown occurs is the breakdown voltage (in kV) of the specimen (see IEC 60243-1 (2013) - Electric strength of insulating materials - Test methods - Part 1 : Tests at power frequencies).

One then measures the thickness of the specimen at the breakdown spot to obtain dielectric breakdown field strength $E_b$ (in kV/mm). This test was repeated on identically prepared specimens of the material to obtain the breakdown distribution of the material (see Rytoluoto T; Gitsas A.; Pasanan S.; Lahti K. Effect of film structure and morphology on the dielectric breakdown characteristics of cast and biaxially oriented polypropylene films. European Polymer Journal, 2017, 95, 606-624).

Statistical evaluation

To evaluate the breakdown distribution (also referred to as "DBD"), IEC 62539 recommends extreme value distributions, such as the 2-parameter Weibull distribution (2-Weibull), the 3-parameter Weibull distribution (3-Weibull), the lognormal distribution and the 1st asymptotic extreme value distribution (1 AEV). Generally, when the breakdown mechanism is not known, a statistical distribution is primarily chosen via fitting quality. However, most authors use the Weibull distribution, of which the cumulative density distribution function for the 3-parameter variant is given by Equation 1 below.

$$F(E_b) = 1 - exp\left\{-\left[\frac{E_b - \delta}{\alpha}\right]^{\beta}\right\}$$

**Equation 1:** Cumulative density function of the Weibull distribution with three parameters α (Scale), β (Shape) and δ (Location)

$$F(E_b) = 1 - exp\left\{-\left[\frac{E_b}{\alpha}\right]^{\beta}\right\}$$

**Equation 2:** Cumulative density function of the Weibull distribution with two parameters α (Scale), β (Shape)

Therein $F(E_b)$ is the cumulative failure probability at the breakdown field $E_b$, $\alpha$ is the Scale parameter representing the distribution average, $\beta$ is the Shape parameter representing dispersion, and $\delta$ is the location parameter, by some called the threshold parameter. This form of the Weibull distribution (3-Weibull) assumes zero failure probability when the applied field is lower that the threshold, i.e. $F(E_b) = 0$, for $E_b < \delta$. This form of the Weibull distribution is rarely used as most authors assume $\delta = 0$, i.e. failure can possibly occur at any applied field ($F(E_b) > 0$ for $E_b > 0$ (Equation 2).

The following experimental data are based on the 2-parameter Weibull distribution and Shape parameter $\alpha$ is reported as $E_{b,}$63.2% as the (average) breakdown field strength of the BOPP film. To obtain $E_{b,}$63.2% (a) a fitting procedure is required, i.e. the two parameters $\alpha$ and $\beta$ are varied so that the fitted Weibull distribution matches the experimental data best. This procedure can be performed as a general function of graphing software (e.g. Origin) or of

statistical software packages (e.g. Minitab).

*DC Conductivity*

Electrical DC conductivity was calculated as the inverse of the DC electrical resistance as determined in accordance with ASTM D257 at 90°C.

Materials

The polymers as listed in table 1 below have been used to prepare example materials.

**Table 1:** Polymers used for the production of CE1, and IE1 to IE2.

| | |
|---|---|
| **HIPP** | Capacitor high isotacticity homopolymer PP produced according to Reference Example 1 of WO 2017/064224 A1<br>$MFR_2$ = 3.3-3.4 g/10min,<br>Isotactic pentad fraction = 96.2 %<br>Ash content = 8 ppm<br>Tc =115 °C |
| **COC1** | Ethylene-norbornene copolymer<br>Tg = 138 °C<br>$MFR_2$ = 14 g/10 min<br>Norbornene content = 76.0 wt.-%<br>Commercially available as TOPAS COC 6013S-04 from TOPAS |
| **COC2** | Ethylene-norbornene copolymer<br>Tg = 158 °C<br>$MFR_2$ = 5 g/10 min<br>Norbornene content = 79.0 wt.-%<br>Commercially available as TOPAS COC 6015S-04 from TOPAS |
| **Blend 1** | Blend of<br>50 wt.-% TOPAS COC 6013S-04 and<br>50 wt.-% TOPAS COC 6015S-04<br>$MFR_2$ = 10 g/10 min<br>Tg = 147 °C<br>Norbornene content = 77.5 wt.-% |
| **HMS** | High melt strength polypropylene, a branched propylene polymer, produced according to Reference Example 4 of WO 2017/064224 |
| **NU** | Quinacridonequinone CGNA-7588 from BASF |

The above polymers have been combined in the amounts indicated in table 2 below and have been melt-blended in order to form example materials CE1, and IE1 to IE4. Example materials IE1 to IE4 are polypropylene compositions comprising a certain amount of one or more cyclic olefin polymer(s). Example material CE1 does not comprise any cyclic olefin polymer.

**Table 2:** Compositions of sample materials CE1 and IE1 to IE4.

| | **CE1** | **IE1** | **IE2** | **IE3** | **IE4** |
|---|---|---|---|---|---|
| **HIPP in wt.-%** | 99 | 84 | 79 | 84 | 79 |
| **COC1 in wt.-%** | | 15 | 20 | | |
| **Blend 1 in wt.-%** | | | | 15 | 20 |
| **HMS in wt.-%** | 1 | 1 | 1 | 1 | 1 |
| **Nu in wt.-%** | 0.0001 | 0.0001 | 0.0001 | 0.0001 | 0.0001 |

The example materials have been obtained in a pelletised form. The pellets have been converted to cast films on a small-scale laboratory cast film line from company COLLIN Lab & Pilot Solutions GmbH. The line consists of an extruder with a Ø 30 mm screw with an LID ration of 30. The extruder temperature has been set at 235 °C, the melt temperature was 235°C and has been recorded after 45 min of process stabilization. The extruder is followed by a die with a width of 300 mm. The die has a flexible die lip with a die gap of 0.5 - 1.5 mm. The line has been run at a constant throughput of 8 kg/h and a line speed of 10 m/min. The end width of the film was cut to 270 mm. The cast films have been produced with a thickness of 250 μm.

Additionally, the pellets have been compression moulded into plaques with a thickness of 650±50 μm. The properties of the example materials have been measured on the cast films or plaques, as appropriate, according to the measurement methods as outlined above. The results are listed in table 3.

**Table 3:** Properties of CE1, IE1 to IE4.

| | CE1 | IE1 | IE2 | IE3 | IE4 |
|---|---|---|---|---|---|
| **OIT in °C** | 248.6 | n.d. | n.d. | 251.0 | 253.2 |
| **$E_b$, 63.2% in kV/mm** | 113.5 | 118.0 | 134.2 | 120.3 | 128.4 |
| **DC-conductivity in fS/m** | 5.2 | n.d. | 0.5 | 1.5 | 1.1 |
| | n.d. = not determined | | | | |

As may be concluded from table 3, the dielectric breakdown field strength of a cast film is increased by up to ~20% when replacing a part of the HIPP with a COC or a COC blend (134 kV/mm for IE2 vs. 113.5 kV/mm for CE1). At the same time, the introduction of a COC or COC blend also increases the thermal stability of a film produced from the respective polypropylene composition. This is reflected by an increase in the oxidation induction temperature by at least 2 °C (248.6 °C for CE1 vs. 251.0 °C for IE3). Last but not least, DC-resistivity is improved, as can be derived from the values for the DC-conductivity for inventive examples IE1-IE4 which are considerably smaller than 5.2 for CE1.

Altogether, these favorable trends make biaxially oriented films comprising the polypropylene compositions according to the present invention suitable for the production of capacitors with an excellent durability and lifetime.

## Claims

**1.** Polypropylene composition comprising

(A) a high isotactic homopolymer of propylene in a content from 70 to less than 95 wt.-%,
(B) a cyclic olefin polymer composition in a content from 5 to less than 30 wt.-%, and
(C) a nucleating agent in a content from 0.0000001 to 1 wt.-%,

wherein the contents of (A), (B) and (C) are each based on the total weight of the polypropylene composition.

**2.** Polypropylene composition according to claim 1, further comprising

a branched propylene polymer in a content from 0.1 to 10 wt.-% based on the total weight of the polypropylene composition, preferably a branched propylene polymer having a branching index g' of 0.9 or less, preferably 0.8 or less,
wherein the branching index g' is the ratio $[iV]_{br}/[iV]_{lin}$, with $[iV]_{br}$being the intrinsic viscosity of the branched propylene polymer and $[iV]_{lin}$ being the intrinsic viscosity of a linear propylene polymer having the same weight average molecular weight as the branched propylene polymer, the intrinsic viscosities being measured according to DIN ISO 1628/1, October 1999 in decalin at 135 °C.

**3.** Polypropylene composition according to claim 2, comprising

(A) the high isotactic homopolymer in a content from 75 to less than 90 wt.-%,
(B) the cyclic olefin polymer composition in a content from 10 to less than 25 wt.-%,
(C) the nucleating agent in a content from 0.0000001 to 1 wt.-%, and
(D) the branched propylene polymer in a content from 0.1 to 5 wt.-%,

wherein the contents of (A) to (D) are each based on the total weight of the polypropylene composition.

**4.** Polypropylene composition according to one of the preceding claims, wherein the high isotactic homopolymer of propylene (A) comprises

one or more additives in a content from 0 to 2.0 wt.-%, preferably in a content from 0.05 to 0.5 wt.-%, based on the weight of the high isotactic homopolymer of propylene (A),
wherein the one or more additives are preferably selected from the group consisting of antioxidants, stabilizers, acid scavengers and combinations thereof.

**5.** Polypropylene composition according to one of the preceding claims, wherein the nucleating agent (C) is a beta-nucleating agent,
preferably a beta-nucleating agent selected from the group consisting of 5,12-dihydro-quino[2,3-b]acridine-7,14-dione, quino[2,3-b]acridine-6,7,13,14(5H,12H)-tetrone, 5,6,12,13-tetrahydroquino[2,3-b]acridine-7,14-dione and mixtures thereof.

**6.** Polypropylene composition according to one of the preceding claims, wherein the cyclic olefin polymer composition (B) is a cyclic olefin copolymer composition,

preferably a cyclic olefin copolymer composition comprising

cyclic olefin units, for example norbornene units in a content of from 70 to 90 wt.-%, preferably from 75 to 85 wt.-%, more preferably from 75 to 80 wt.-%, and
non-cyclic olefin units, for example ethylene units in a content of from 10 to 30 wt.-%, preferably from 15 to 25 wt.-%, more preferably from 20 to 25 wt.-%,

wherein the contents are each based on the total weight of the cyclic olefin copolymer composition (B).

**7.** Polypropylene composition according to one of the preceding claims, wherein the cyclic olefin polymer composition (B) has a glass transition temperature, measured according to ISO 11357, in the range of from 140 to 180 °C, preferably 140 to 160 °C, more preferably 140 to 155 °C, most preferably 145 to 150 °C.

**8.** Polypropylene composition according to one of the preceding claims, wherein the cyclic olefin polymer composition (B) has a $MFR_2$ (260°C), measured according to ISO 1133, of from 2 to 50 g/10 min, preferably from 2 to 25 g/10 min, more preferably from 2 to 15 g/10 min.

**9.** Polypropylene composition according to one of the preceding claims, wherein the cyclic olefin polymer composition (B) comprises at least a first cyclic olefin polymer (b1) and a second cyclic olefin polymer (b2),
wherein the first cyclic olefin polymer (b1) preferably has a glass transition temperature, measured according to ISO 11357, of below 140 °C, in particular of from 60 to below 140 °C, and the second cyclic olefin polymer (b2) preferably has a glass transition temperature, measured according to ISO 11357, of above 155 °C, in particular of from above 155 to 190 °C.

**10.** Polypropylene composition according to one of the preceding claims, wherein the high isotactic homopolymer (A) of propylene has at least one of:

- a content of isotactic pentad fraction, measured by $^{13}C$ NMR, of from 93 to 99.5%, preferably 95 to 99.0%, more preferably from 96 to 98.5%,
- a $MFR_2$ (230 °C), measured according to ISO 1133, of from 0.4 to 10 g/10 min, preferably of from 0.5 to 5 g/10 min,
- an ash content, measured according to ISO 3451-1 (1997), of 60 ppm or less, preferably 30 ppm or less, more preferably 20 ppm or less,
- a crystallization temperature (Tc), measured according to ISO 1133, of from 110 to 130 °C, preferably from 110 to 120 °C.

**11.** Cast film comprising the polypropylene composition according to one of the preceding claims.

**12.** Cast film according to claim 11, having a dielectric breakdown field strength, $E_{b,}$63.2%, of 118 kV/mm or more,

preferably 120 kV/mm or more, wherein the dielectric breakdown field strength, $E_{b,}$63.2%, is determined according to IEC 60243-1 at 90 °C and according to IEC 62539.

**13.** Cast film according to one of claims 11 and 12, having at least one of:

an oxygen induction temperature of 250.0 °C or more, wherein the oxygen induction temperature is measured according to ISO 11357, and
a DC conductivity of 2 fS/cm or less when taken as the inverse of the DC electrical resistance as determined in accordance with ASTM D257 at 90 °C .

**14.** Biaxially oriented film comprising the polypropylene composition according to one of claims 1 to 10.

**15.** Capacitor comprising the biaxially oriented film according to claim 14.

Europäisches Patentamt
European Patent Office
Office européen des brevets

# EUROPEAN SEARCH REPORT

Application Number
EP 23 18 4453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 2 995 641 A1 (BOREALIS AG [AT]) 16 March 2016 (2016-03-16)<br>* claims 1,4,9,11,13 *<br>* paragraphs [0005] - [0008], [0036], [0062], [0078] *<br>* example IE1 *<br>----- | 1-15 | INV.<br>B32B27/32<br>H01G4/18 |
| Y | WO 2022/089771 A1 (TOPAS ADVANCED POLYMERS GMBH [DE]) 5 May 2022 (2022-05-05)<br>* claims 1-17 *<br>* examples *<br>* page 2, line 17 - page 3, line 2 *<br>----- | 1-15 | |

TECHNICAL FIELDS SEARCHED (IPC)

B32B
H01G
C08L

The present search report has been drawn up for all claims

1

| Place of search | Date of completion of the search | Examiner |
|---|---|---|
| Munich | 12 December 2023 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 18 4453

This annex lists the patent family members relating to the patent documents cited in the above-mentioned European search report. The members are as contained in the European Patent Office EDP file on
The European Patent Office is in no way liable for these particulars which are merely given for the purpose of information.

12-12-2023

| Patent document cited in search report | Publication date | Patent family member(s) | Publication date |
|---|---|---|---|
| EP 2995641 A1 | 16-03-2016 | BR 112017004320 A2 | 05-12-2017 |
| | | CN 106604962 A | 26-04-2017 |
| | | EP 2995641 A1 | 16-03-2016 |
| | | ES 2771153 T3 | 06-07-2020 |
| | | JP 6529578 B2 | 12-06-2019 |
| | | JP 2017528565 A | 28-09-2017 |
| | | KR 20170048550 A | 08-05-2017 |
| | | KR 20180103182 A | 18-09-2018 |
| | | US 2017240733 A1 | 24-08-2017 |
| | | WO 2016038092 A1 | 17-03-2016 |
| WO 2022089771 A1 | 05-05-2022 | CN 116368175 A | 30-06-2023 |
| | | DE 102020006588 A1 | 28-04-2022 |
| | | EP 4237471 A1 | 06-09-2023 |
| | | JP 2023548065 A | 15-11-2023 |
| | | KR 20230104643 A | 10-07-2023 |
| | | US 2023391966 A1 | 07-12-2023 |
| | | WO 2022089771 A1 | 05-05-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- CN 101724195 A
- EP 2995641 A1
- WO 2018210854 A1
- WO 2018197034 A1
- EP 1892264 A1
- EP 0879830 A
- EP 0574801 A
- EP 0574804 A
- EP 0190889 A2
- EP 0384431 A2
- EP 0142724 A2
- EP 0678527 A
- EP 0688817 A
- EP 0450342 A
- WO 2020127862 A1
- WO 2017064224 A1
- WO 2017064224 A

### Non-patent literature cited in the description

- *Macromol. Chem. Phys.*, 1998, vol. 199, 1221-1232
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- Electrical degradation and breakdown in polymers. **DISSADO L. A.** ; **FOTHERGILL J. C.** IEEE Materials and Devices. Peter Peregrinus Ltd., 1992
- **CHEN G.** ; **DAVIES A.E.** The influence of defects on the short-term breakdown characteristics and long-term dc performance of LDPE insulation. *IEEE Transactions on Electrical Insulation*, 2000, vol. 7, 401-407
- **RYTOLUOTO L** ; **GITSAS A.** ; **PASANAN S.** ; **LAHTI K.** Effect of film structure and morphology on the dielectric breakdown characteristics of cast and biaxially oriented polypropylene films. *European Polymer Journal*, 2017, vol. 95, 606-624
- **RYTOLUOTO T** ; **GITSAS A.** ; **PASANAN S.** ; **LAHTI K.** Effect of film structure and morphology on the dielectric breakdown characteristics of cast and biaxially oriented polypropylene films. *European Polymer Journal*, 2017, vol. 95, 606-624